# EUROPEAN PATENT APPLICATION

(11) **EP 1 054 550 A2**
(43) Date of publication of application: **22.11.2000**
(21) Application number: 99308812.9
(22) Date of filing: 05.11.1999
(51) Int. Cl.: H04M 1/02

(54) **Portable telephone**

(30) Priority: 18.05.1999 GB 9911578
(71) Applicant: VTech Communications, Ltd., Tai Po, N.T (HK)
(72) Inventor: Murphy, Paul A. Esq., Hong Kong (HK)
(74) Representative: Loveless, Ian Mark

(57) **Abstract**

A portable telephone handset apparatus is provided, which incorporates a handwriting input surface to permit a user to enter numeric digits of a telephone number to be dialled, digit by digit, by tracing each number with a finger or stylus on the handwriting input surface.

## Description

### TECHNICAL FIELD

The present invention relates to portable battery-powered telephone handset constructions.

### BACKGROUND OF THE INVENTION

A conventional telephone handset typically incorporates on its face a numeric keypad which permits the user to enter the digits of a telephone number assigned to the party the user wishes to telephone. The keypad typically comprises a matrix of momentary contact mechanical or electronic switches which are actuated by the user physically depressing a button associated with each switch, be it a push button or membrane keypad surface. Accordingly, to dial a phone number a threshold level of manual dexterity is required to physically locate and press the desired key and not inadvertently press the wrong adjacent key. Moreover, as telephones, and in particular cellular telephones get smaller and smaller the ergonomics of the telephone keypad become a greater concern as smaller keypads require even greater coordination and dexterity to ensure that the desired digit of a telephone number is entered and that the wrong button is not depressed, such as when the adjacent button is pushed in error.

Moreover, the increased complexity of the user interface for telephones which is required to take advantage and operated the expanded features offered in telephone handsets often require the user to be able to input into the telephone alphabetical characters and not just numbers. For example, a typical cellular phone offers the user the ability to associate in electronic memory a person's name, or other information, with a telephone number that is also stored in the phone's electrical memory thereby permitting the user to access a telephone number by "name" - obviating the need to memorize lengthy telephone numbers.

However, in most telephone devices, alphabetical and other non-numeric character can typically be entered only by completing a complex and/or repetitious set of steps - steps which rely upon the long ago established convention of associated letters of the English alphabet with designated numbers of the telephone keypad. For example, the letters "A", "B" and "C" are each typically associated with the "2"; "D", "E" and "F" with the number 3, and so on. To input a letter of the alphabet the user must typically first enter an "alphabetic mode" such that the telephone will be commanded to recognise that the keys on the keypad which are depressed are to be accepted for input as letters of the alphabet and not numbers. Further, multiple keystrokes on a single key are required. For example, to enter the "B" the "2" key is pressed twice, while to enter the letter "C" the "2" key is pressed three times.

A further potential disadvantage exists with regard to non-English languages where all of the letter of a non-English alphabet cannot be accommodated on the face of a keypad thereby further complicating the entry of alphabetical information.

We have appreciated the desirability of merging of telephone devices with computers and other microprocessor based devices. For example, it may be desirable to integrate into a telephone the complete or partial functionality of a personal digital assistant ("PDA") which can provide calender/date book functions and telephone book functions, among others, in a telephone handset. These additional functions require increased ability to input alphabetical and other symbolic information in addition to only numbers. The requirement of pressing too many keystrokes to enter a single non-numeric is a significant impediment to the use of telephones which incorporate such added features and functionality. At least one telephone handset manufactured by NOKIA and which incorporates such extended features and functions but also incorporates a complete alpha-numeric standard keyboard. However, the large number of both numeric and alphabetic keys and the need to provide the user the ability to actuate individual keys results in the overall size for the device being relatively large in comparison to current state-of-the-art cellular telephone and thus does not permit the device to be made as small as other "telephone only" cellular handsets.

We have appreciated the need to permit a user to enter not only numeric but also alphabetical characters, and have also appreciated that this could be without the need to use a conventional pushbutton keypad arrangement.

### SUMMARY OF THE INVENTION

In a broad aspect, the invention resides in a handset construction which includes a handwriting input surface in place of, or complementary to, a standard input keypad, which handwriting input surface permits a user to enter both numeric and non-numeric data, such as a telephone number and name, by writing such data by hand directly on the input surface.

In one aspect, the present invention provides a handwriting input surface to permit a user to enter a telephone number to be dialled, digit by digit, by tracing each number with a finger or stylus on the handwriting input surface.

In a second aspect, the present invention also provides a handwriting input surface to permit a user to enter alphabetical characters, by tracing each letter with a finger or stylus on the handwriting input surface.

Accordingly, there is provided a portable telephone handset apparatus (10) comprising: a main body portion (13) for substantially containing the electronic functional components of the telephone handset apparatus; a user input keypad (32) for controlling the operation of the telephone handset apparatus; characterised by an integrated handwriting input surface (35) wherein the handwriting input surface is electrically connected to the electronic functional components of the telephone handset apparatus for permitting the user to enter a telephone number to be dialled, digit by digit, by tracing each digit on the handwriting input surface.

There is also provided a portable telephone handset (10) comprising: a main body portion (13) for substantially containing the electronic functional components of the telephone handset apparatus; a user input keypad (32) for controlling the operation of the telephone handset apparatus; characterised by an integrated handwriting input surface (35) wherein the handwriting input surface is electrically connected to the electronic functional components of the telephone handset apparatus for permitting the user to enter an alphabetic character by tracing the character on the handwriting input surface.

The embodiment of the present invention is directed to a construction for a portable cellular telephone, though the concepts may be incorporated into virtually any portable telephone handset.

In the embodiment, a main portion is provided for substantially containing the electronic functional components of the telephone handset apparatus. A user input keypad is provided for controlling the operation of the telephone handset apparatus. A handwriting input surface is electrically connected to the electronic functional components of the telephone. The handwriting input surface permits the user to enter a telephone number to be dialled, number by number, by tracing each number with a finger or stylus on the handwriting input surface. The handwriting input surface further permits the user to enter an alphabetic or other non-numeric character by tracing the character on the handwriting input surface. The handwriting input surface may comprise a touch-sensitive LCD panel which functions as both visual display and input surface. The handwriting input surface may alternatively comprise a "mouse pad" type device such as that commonly found in laptop computers and which is positioned adjacent a display or keypad area of the portable telephone.

### BRIEF DESCRIPTION OF THE DRAWINGS

An embodiment of the invention will now be described with reference to the accompanying figures in which:

Fig 1 is a top plan exploded view of the telephone handset construction according to one embodiment of the invention, shown in its open configuration.

Fig 2 shows the handset of the embodiment of Fig 1 in its fully assembled and closed, configuration.

Figs 3 & 4 illustrate partial, schematic side elevations of the handset embodiment of Figs 1 and 2.

Fig 5 is a perspective exploded view of a telephone handset construction according to one embodiment of the invention.

Fig 6 is a sectional side view of the elevation of the telephone handset of the embodiment of Figs 1-3, taken along line 6-6 of Fig 2.

Fig 7 is a sectional elevation of the telephone handset of the embodiment of Figs 1-3, taken along line 7-7 of Fig 2. and

Fig 8 is a block diagram of a telephone handset construction specifically incorporating a handwriting recognition surface.

### DESCRIPTION OF AN EMBODIMENT OF THE INVENTION

While this invention is susceptible to embodiment in many different forms, there are shown in the drawings and will be described in detail herein several specific embodiments, with the understanding that the present disclosure is to be considered as an exemplification of the principles of the invention and is not intended to limit the invention to the embodiments illustrated.

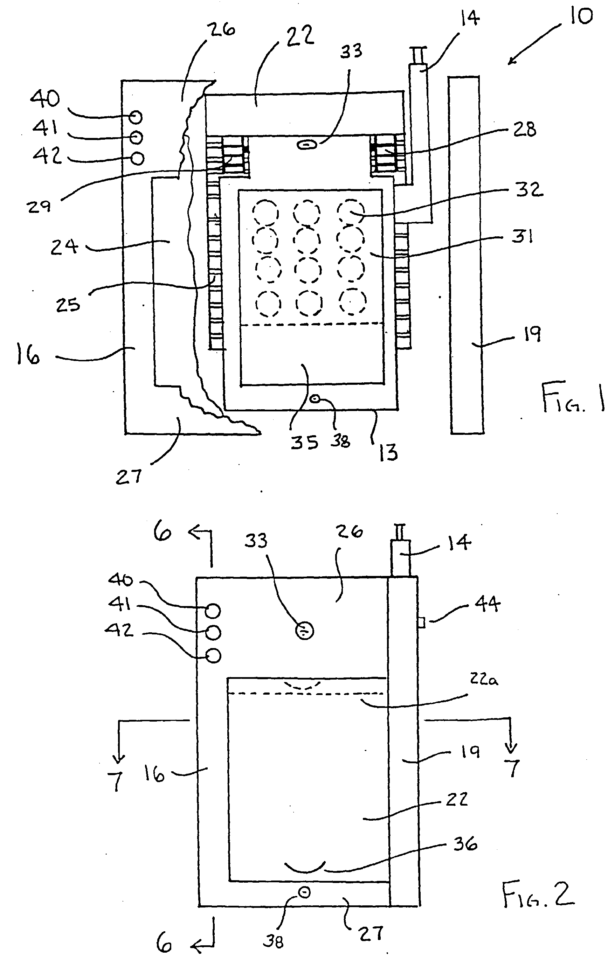

Handset 10 is shown in a top plan exploded view in Fig 1, in its open configuration. Fig 2 shows the handset in its fully assembled and closed, configuration. Handset 10 includes main body portion 13, left side closure 16, right side closure 19, and cover or tambour 22. As shown, antenna 14 extends from the right side of the main body portion 13, but will project through a suitable notch or opening in the right side closure 19, when the handset is completely assembled, though the antenna 14 may extend from the left side 16 or another portion of the handset 10. While preferably the predominance of the electronics of the telephone will be contained within the main body portion, certain components may reside partially or completely in the tambour and/or the left or right side closures.

In order to convey information to the user when the tambour 22 is in its closed position, certain displays, such as power on, battery status and signal strength are each addressed by a LED or by a multi-colour LED (red to green for charging) placed together with suitable indicia on the side closures, as shown by reference numbers 40, 41, 42 in Figs 1 and 2. The necessary electrical connections are provided between LED's 40, 41 and 42 and main body portion 13, in a manner known to those of ordinary skill in the art. A power on-off button 44 is provided to turn the telephone on and off with button 44 being shown disposed on right side enclosure 19.

In the preferred embodiment of the present invention an LCD touch screen 31 is provided in place of a conventional "push button" keypad, LCD touch screen 31 is shown positioned on the front of the main body portion 13 for, in one mode, presenting to the user a graphical display or a telephone keypad 32 for permitting the user to enter the telephone number to be dialled, or operate other functions incorporated into the telephone. To "dial" a telephone number the user merely touches or taps the surface of the LCD touch screen 31 proximate the position of the displayed "keys" 32. In such embodiment, the conventional display is omitted as the necessary information can be conveyed to the user on the LCD touch screen 31. In addition to displaying a telephone dial keypad, the LCD touch screen 31 can serve to display a user interface for a number of other devices which can be integrated into the telephone, such as calculator or address book.

The number dialled and/or other relevant information may be provided to the user on a conventional LED or LCF display (not shown) as is known in the art. Alternatively, one or more regions of the tambour may be manufactured of a clear or translucent material, to enable conventionally disposed main display and the like, positioned on the front face of the main body portion, to be directly viewed through the closed tambour.

Complementing the input device offered by the LCD touch screen 31, is a handwriting input surface 34 shown in Fig 1 positioned proximate the lower edge of LCD touch screen 31. Input surface 35 may be a designated portion of the LCD touch screen 31 or alternatively may be a separate input area such as a "mouse pad" device such as that found in laptop computers. As an alternative to touching the LCD touch screen 31 to enter a telephone number, the user may enter a telephone number, digit by digit, by "writing" each digit with a finger or stylus on the handwriting input surface 35. Handwriting input surface 35 operates in combination with handwriting recognition software stored in the electronics in the main body portion 13 of the phone. The software serves to interpret the motion of the user's stylus or finger as it traces a path corresponding to a letter, number or symbol on the handwriting input surface 35 toward identifying said input and entering an intended associated data element, such as an alpha-numeric character, or executing a predetermined command, such as "re-dial". Examples of software include "GRAFITTI" a shorthand alphabet-numeric alphabet which recognises abbreviated motions and associates such motions with number, letters and symbols.

In operation, the user can, for example, enter the telephone number of the party to be called by "writing" the telephone number, digit by digit using a stylus or finger. Given the flexibility of software programming, the software can be configured to recognise the users input and associate a partial entry with a complete pre-stored data element. For example, by entering the first three numbers of an otherwise complete telephone number the software may automatically display one or more complete telephone numbers from those numbers pre-stored in the memory of the phone toward permitting the user to command that a desired number be dialled - without the need to enter the complete telephone number.

The software may similarly function to retrieve a telephone number from the device's memory when the name of a desired called party who's number is stored in memory has been entered. LCD touch screens and handwriting input surfaces are well known as input devices and can be found on many current laptop computers and personal digit assistant electronic organisers, such as the 3COM/U.S. ROBOTICS PALM device.

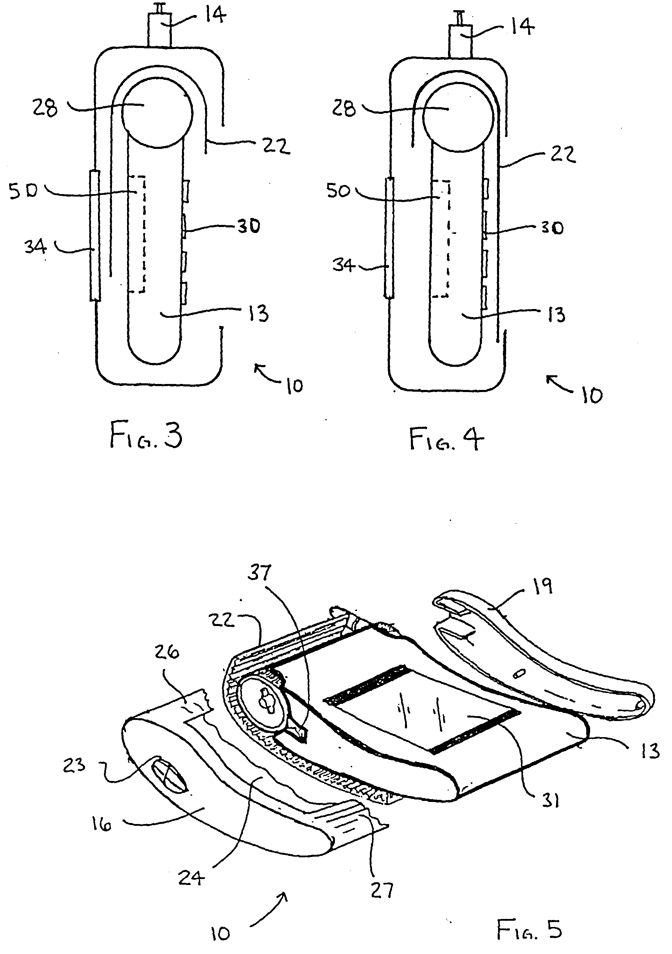

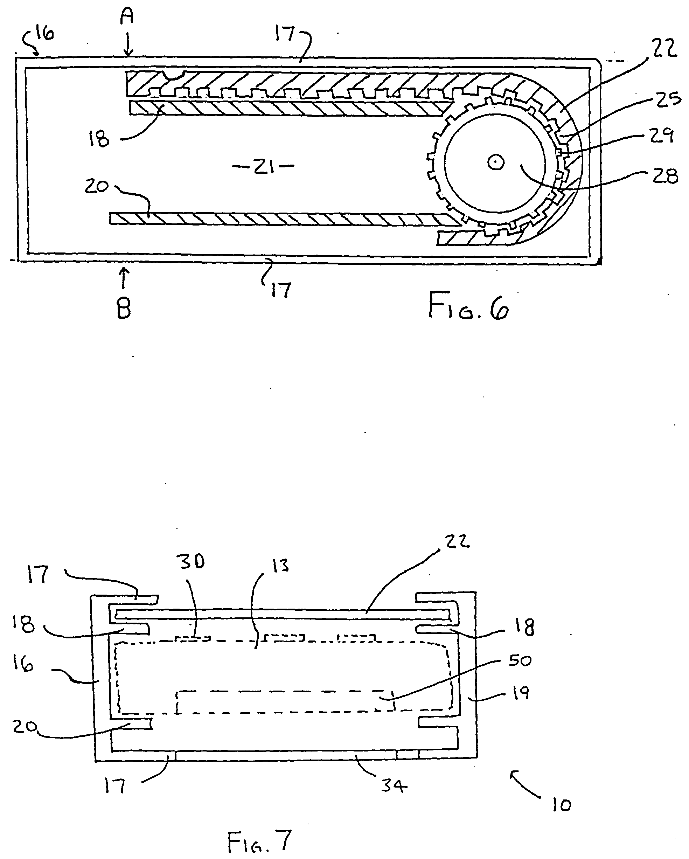

The mechanisms of the moveable cover of handset 10 may be readily understood upon inspection of Figs 3-7. Fig 3 of the drawings illustrates a partial side elevational view of the handset embodiment of Fig 5 and is shown with tambour 22 in its open orientation. Fig 4 illustrates a partial side schematic elevational view of the handset embodiment of Fig 5 specifically illustrating tambour 22 in its closed orientation. Accordingly, it can be seen that tambour 22 serves to cover touch screen 31 thereby protecting its surface and preventing unintended operation of the device. As described herein, tambour 22 is a substantially flexible material the interior surface of which engages with drive wheel 28. As shown in Fig 4 main body portion 13 of the telephone is contained within an exterior housing comprising side portions 16 and 19 which when assembled provide an opening on their front faces through which the user may view and actuate touch screen 31 and input surface 35. Touch screen 31 and input surface 35 are each illustrated as being centrally positioned upon the top surface of main body portion 13. As illustrated, left side portion 16 includes back panel 24 which connects to right side portion 19. Accordingly, in this embodiment of the present invention, tambour 22 does not serve to provide the back outer surface of the telephone handset and instead tambour 22 carried within an outer housing formed by rigid back panel 24. Though not shown in Fig 5, it is contemplated that sides 16 and 19 each contain the required requisite track structures to engage with and carry tambour 22. One feature of this embodiment is the ability for the battery cells which provide electronic power to the telephone handset to be contained with a compartment on the back surface of main body portion 13, instead of being piggy-backed to the back surface or inserted through a narrow opening in the side portion of the housing. In Figs 3 and 4, battery cell 50 is shown residing within main body portion 13. The user may thus obtain access to battery cell 50 when tambour 22 is in its closed position inasmuch as it does not overlie the back surface of the telephone handset 10. It is contemplated that a door or the like located on the back surface 24 may be alternatively opened or closed to permit access to battery cell 50 towards exchanging a fully charged battery for a discharged battery to thus permit continued operation of telephone handset 10.

Tambour 22 is generally flexible and is made so by the presence of transversely extending teeth/grooves 25. Main body portion of handset 10 has one or more guide wheels 28, which are rotatable relative to the main body portion 13. In a preferred embodiment of the invention, two guide wheels 28 are provided, one on each side of the main body portion 13.

Preferably, each guide wheel 28 is configured in the form of a toothed gear, wherein the teeth 29 are sized and spaced to mate with the teeth/grooves 25 of the flexible tambour 22, when a portion of the flexible tambour 22 is furled around the main body portion 13. The teeth on the guide wheels and the teeth of the flexible portion of the tambour are shown as being rectangular or squared; however, teeth of other configurations may be employed, so long as when the tambour 22 is held in place against the guide wheels, by the side closures, as described herein, there is a driving/driven relationship between the tambour and the guide wheels 28, in an alternative embodiment, the guide wheels 28 and the tambour 22 may be toothless, if the guide wheels 28 and tambour 22 are fabricated from complementary materials which will permit a satisfactorily frictional engagement there between, with the tambour being held in such engagement against the guide wheels by the side closures.

Left side closure 16 and right side closure 19 may be joined together with trim panels 24, 26 and 27. As illustrated panel 24 comprises a rigid surface which forms the back panel of the device 10 and protects the tambour 22 and main body portion 13. Panel 27 is a trim panel which forms the bottom facia of the phone with panel 28 forms the top facia of the phone. As illustrated in Fig 2, top panel 26 includes a speaker port 33 for communicating sound from a speaker positioned on the insider surface of the panel which is located so as not to be obstructed by tambour 22 and panel 27 includes microphone port 38.

The manner in which the tambour is held in engagement with the guide wheels and guided in its movement around the main body portion is illustrated, in accordance with one embodiment of the invention, in Figs 6 and 7.

Fig 6 is a sectional side elevation of the telephone handset of the embodiment of Figs 1 to 5 taken along line 6-6 of Fig 2. As may be observed from Fig 1, in an embodiment of the invention, tambour 22 has a width from side to side which is slightly greater than the width of main body portion 13, so than an amount of tambour 22 projects laterally from each side of main body portion 13. In order to provide a track for tambour 22 to follow, a portion of the periphery of left side closure 16 may be provided with a laterally extending outer track structure 17 extending around the periphery clockwise from point A to point B. Although particular locations for points A and B are shown in Fig 6, it is to be understood, that as the specific contours of the overall housing may be varied by one of ordinary skill in the art having the disclosure before them, the particular locations of points A and B may be correspondingly changed as well. When suitably configured mating surfaces of the main body portion 13, by any suitable method, such as adhesive, sonic welding, fasteners etc., a portion of the lateral width of outer track structure 17 will overhang (or underhang) and enclose portions of the tambour 22.

Left side closure 16 is also provided with inner track structures 18 and 20 each of which likewise will project laterally, from wall 21 toward main body portion 13. The thickness of the main body portion 13 is reflected in the construction of left side closure 16. Inasmuch as track structures 16, 17 and 20 define the path of movement of tambour 22, main body portion 13 should fit substantially in the space defined and dimensioned as between track structures 18 and 20. Right side closure 19 is also provided with corresponding configured inner track structures which likewise project laterally from the inner surface of right side closure 19 toward main body portion 13.

When the cover is to be opened, the tambour 22 will be pulled upward and away from the bottom of the handset. With respect to Fig 6, this means that the tambour 22 will be pulled to the right, as indicated by the arrow. In order to enable this to occur the outer track structure either is completely absent, or extends laterally less than that portion between points A and B, and to the right thereof, so that the outer track structure does not overlap the rigid portion of the tambour. In such an event the left side closure 16 and right side closure 19 may be joined together by a front panel structure which overlays the top of main body portion 3 and includes an opening through which keypad keys may extend and a visual display may be viewed.

Fig 7 is a sectional elevation of telephone handset 10, taken along line 7-7 of Fig 2 and looking away from the top of the handset, so that the guide wheels are not in view. Fig 7 is shown in the configuration in which the tambour is in its closed, furled configuration. In addition, the main body portion has been illustrated in simplified form and in broken lines, and the antenna has been omitted from this drawing, for ease of illustration of this view. The overhanging and underhanging track structures 17, 18 and 20 can be seen to laterally overlap portions of the tambour 22, which, in its unfurled configuration, covers the front of the main body portion (above and below as seen in Fig 7). Fig 7 of the drawings is a cross sectional view of telephone handset 10 taken along line 7-7 as shown in Fig 2 wherein tambour 22 can be seen carried by tracks along each inside surface of respective sides 16 and 19. Battery cell 50 is shown carried within main body portion 13. Battery access door 36 is shown located on back panel 24 which permits access to battery cell 50 when tambour 22 is in its closed position.

While the tambour 22 is illustrated in Figs 1-7 as having a substantially uniform thickness from one side edge to the other, and thus its outer surface is lower (or higher) than that adjacent peripheral edges of the left and right side closures, it is to be understood that, if desired, the contour of the tambour could be chosen to make the outer surface of the central (non-overlapped) region of the tambour flush with the peripheral edges of the left and right side closures.

Right side closure 19 may be provided with a substantially corresponding set of guide track structures, having suitable gaps or apertures provided therein for accommodating the antenna structure projecting from the right side of the main body portion 13, as illustrated in Fig 1.

As previously mentioned, the guide wheels are in a driven/driving relationship with the tambour 22 (either through inter-engaging teeth 25 on tambour 22 and teeth 29 on guide wheels 28, or through a frictional engagement of relatively smooth surfaces). Further, the guide wheels 28 are rotatable, relative to the main boy portion 13 of the telephone handset. While the guide wheels 28 could be connected to each other by an axle extending through the width of the main body portion, this would take up space in the interior of the main body portion which could otherwise be occupied by electronics and other elements of the functioning telephone. Alternatively, the guide wheels may be mounted rotatably on short fixed or rotatable "dead" axles emanating from or affixed to the side walls of the main body portion.

The guide wheels could be configured to be freewheeling relative to the main body portion. This construction would not particularly effect the movement of the tambour 22. To open and/or close tambour 22 one need only slide the tambour 22 in the desired direction and to that end finger grip 36 is provided. When closing the tambour 22 the tambour being drawn along the guide track structures would simply cause the guide wheels 28 to rotate. However, when opening tambour 22 by moving it into the main body portion 13 the flexible tambour 22 may be prompted to buckle or bind and not be able to reliably drive the guide wheels.

Accordingly, it may be desirable to provide one or all of the guide wheels with a drive mechanism in order the facilitate retraction of the tambour back "into" the open position. Many such mechanisms are known, such as ratcheting spring biassing mechanisms are employed in automotive and/or residential window shades. In such mechanisms, pulling the shade (or in the present invention), the tambour out is accomplished against the increasing force of a spring (usually a coil spring). A ratchet mechanism prevents the shade (tambour) from retracting, once the pulling force is released. However, once the shade (tambour) has been pulled out beyond a certain predetermined distance, the ratchet releases, and the spring will rotate the guide wheel or pull the tambour causing the tambour to retract back into its furled or stowed orientation. Such mechanisms are well known, and accordingly, a detailed discussion and illustration of such a mechanism is omitted from the drawings, as being unnecessary for a complete understanding of the function of the telephone housing design.

Alternatively, pulling the tambour closed may be accomplished by winding against the bias of a spring, with a ratchet mechanism to prevent a sudden rewinding and thus opening of the tambour. A push button-type release mechanism such as are known in the art of auto window shades, may be provided for enabling the refurling of the tambour. The push button (e.g, button 23, the embodiment of Fig 5) may be mounted in the side closure, but may engage a counterpart lever or pawl 37 positioned in the surface of the side of the main body portion 13. By putting a spring bias on the guide wheel 28 and providing a spring loaded pawl 37 to stop the guide wheel 28 from retracting in a undesired manner, the tambour 22 can be closed and will stay in that position. By pressing on the release button 23, the pawl 37 may be moved out of engagement with the guide wheel, and the wheel will be free to move under the force of the spring(not shown) to open tambour 22. Again, such mechanisms are well known, and accordingly, a detailed discussion and illustration of such a mechanism is omitted from the drawings, as being unnecessary for a complete understanding of the function of the telephone housing design.

Other known stored-energy drive mechanisms may be used as well. In addition, as an alternative method for effecting the movement of the tambour 22, if internal space and power considerations permit, a powered drive mechanism, such as a servo-motor connected to the guide wheels, may be employed to extend and/or retract the tambour. Such a powered drive system could be actuated by suitable controls, the buttons for which might, for example, be positioned on the side closures, and connected to the main body unit by electrical contacts on the side closure engaging counterpart contacts on the outer side surface of the main body unit.

Aside from the basic features described with respect to the embodiment of Figs 1-7, the telephone handset construction of the present invention may be modified to accommodate a variety of features. For example, the antenna structure, which extends from the side of the main body portion, may be an extendible telescoping antenna. This antenna may be extended and retracted by a central core which may be driven by a pair of suitably positioned pinch rollers, or by a ball screw or worm gear arrangement, or the like, any of which may be readily disposed in gear-driven relationship to the guide wheel on that side of the housing, such that the antenna is automatically extended when the tambour is extended. Such mechanisms generally are know and as such detailed illustrations of them have been omitted for purposes of simplifying the illustration of the present disclosure.

The telephone handset construction of Figs 1-7 is illustrated, for purposes of simplicity of illustration, as having a relatively simple and regular configuration, apart from the presence of the antenna. From a front elevation view, the handset has a substantially rectangular contour. From a side elevation view, the handset is illustrated as having straight front and back faces, and semicircular contours at its top and bottom. It is to be understood that these contours may readily be altered by one of ordinary skill in the art of telephone handset design, having the present disclosure before them, without departing from the scope of the present invention. For example, the handset configuration of Fig 5 may be employed, which has a curved side elevation contour. The matter or providing a suitably guided tambour 22 to surround such a contour, is a matter or making sure that the tracks on the side closures substantially follow the contours of the outer surface of the handset.

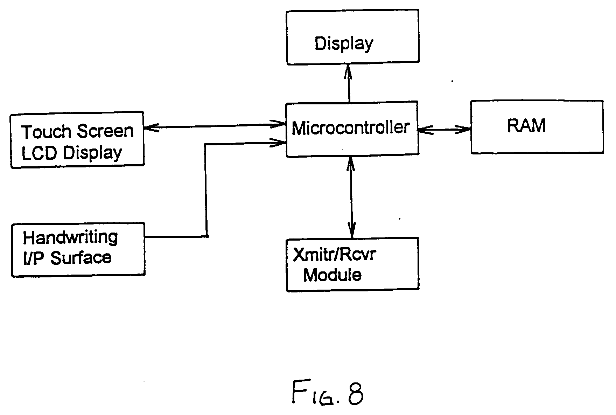

Fig 8 of the drawing is a block diagram illustrating the major functional components which comprise one embodiment of the present portable telephone handset construction with integrated handwriting input surface. Specifically, microcontroller 60 is shown electrically connected to the transmitter/receiver module 62 which form the backbone of a cellular telephone handset. Electrically connected to microcontroller 60 is shown RAM 61. It is contemplated within the scope of the present invention that other appropriate forms of memory such as flash ROM and the like may be incorporated. Touch screen LCD display 63 is shown electrically connected to microcontroller 60. Touch screen LCD display 63 serves to present the user a graphic representation of the keypad and serves to accept from the user commands to dial the appropriate digits entered in sequence via the user making physical contact with the surface of the touch screen 63. Handwriting input surface 64 is likewise shown as electrically connected to microcontroller 60. Handwriting input surface 64 serves to permit the user to input either numerical, alphabetical or symbol characters and/or other commands to the telephone handset by tracing patterns using a finger stylus or the like on the surface 64.

The foregoing description and drawings merely explain and illustrate the invention and the invention is not limited thereto except insofar as the appended claims are so limited, inasmuch as those skilled in the art, having the present disclosure before them will be able to make modifications and variations therein without departing from the scope of the invention.

## Claims

1. A portable telephone handset apparatus (10) comprising:
a main body portion (13) for substantially containing the electronic functional components of the telephone handset apparatus;
a user input keypad (32) for controlling the operation of the telephone handset apparatus; characterised by
an integrated handwriting input surface (35)
wherein the handwriting input surface is electrically connected to the electronic functional components of the telephone handset apparatus for permitting the user to enter a telephone number to be dialled, digit by digit, by tracing each digit on the handwriting input surface.

2. A portable telephone handset (10) comprising:
a main body portion (13) for substantially containing the electronic functional components of the telephone handset apparatus;
a user input keypad (32) for controlling the operation of the telephone handset apparatus; characterised by
an integrated handwriting input surface (35)
wherein the handwriting input surface is electrically connected to the electronic functional components of the telephone handset apparatus for permitting the user to enter an alphabetic character by tracing the character on the handwriting input surface.
